Europäisches Patentamt

European Patent Office

Office européen des brevets

(11) Publication number: **0 013 042**
A2

# EUROPEAN PATENT APPLICATION

(21) Application number: **79200740.3**

(22) Date of filing: **07.12.79**

(51) Int. Cl.³: **A 23 B 4/14**
**A 23 B 4/02**

(30) Priority: **11.12.78 BE 192239**

(43) Date of publication of application:
**09.07.80 Bulletin 80/14**

(84) Designated Contracting States:
**AT CH DE FR GB IT LU NL SE**

(71) Applicant: **"P.V.B.A. Chemicals"**
**Veldstraat, 5**
**B-9890 Knesselare(BE)**

(72) Inventor: **Vekemans, Patrick**
**7/21-23 Mc Burney Road**
**Cabramatta, New South Wales 2166(AU)**

(74) Representative: **Pirson, Jean et al,**
**c/o Bureau Gevers, S.A. rue de Livourne, 7 bte 1**
**B-1050 Brussels(BE)**

(54) **Method for the preserving of meat pieces, solution used therefor and meat piece preserved according to said method.**

(57) The still-warm carcasses are sprinkled with an acid solution having a pH between 1,6 and 2,1 containing between 40 and 50% by weight liquid sugar, the remainder being comprised of a salt solution and/or a solution from one or a plurality of organic acids.

EP 0 013 042 A2

Croydon Printing Company Ltd.

"Method for the preserving of meat pieces, solution used therefor and meat piece preserved according to said method"

---

The invention relates to a method for the preserving of meat pieces, particularly freshly-slaughtered carcasses and parts thereof, according to which a meat piece to be slaughtered is sprinkled with an acid solution.

With known methods of this kind the meat piece is sprinkled with a water solution of an organic acid such as citric acid, lactic acid, acetic acid or ascorbic acid. It is generally known that due to the lowering of the pH-value on the surface of the meat, the bacteria growth is slowed-down in such a way that said meat can be kept longer and this without having to freeze the meat.

The keepability of the meat differs according to the selection of the acid used but it is however always relatively limited. The sprinkling with the solution does not avoid the drying of the meat.

The use of sugar has also been proposed, without however improving substantially the keepability of the meat because the amounts of sugar were not suitable to enhance the desired film forming which is obtained according to the invention.

The invention has now for object to provide a method for preserving meat pieces whereby a very long keepability of the meat is obtained and moreover the drying of the meat is avoided.

For this purpose, the meat piece is sprinkled with an acid solution which contains from 30 to 70% by weight of a liquid sugar.

In an useful embodiment of the invention, the meat piece is sprinkled with a solution having a pH lying between 9 and 5.

In an advantageous embodiment of the invention the meat piece is sprinkled with an acid solution of liquid sugar the sugar of which is comprised from 5 to 51% by weight of dextrose syrup.

0013042

The solution comprises from 30 to 70% by weight and preferably from 40 to 60% by weight of liquid sugar.

The sugar proper contains from 5 to 51% by weight of dextrose and at least 42% by weight of fructose. Preferably the sugar also contains 5.5% by weight of maltose. The sugar can moreover comprise traces of triose and 1.5% by weight of higher sugars.

Due to a peculiar method for the manufacturing of the liquid sugar syrup and as the case may be also due to a maturing process with enzymes, it is insured that the pH-value of the sugar is always very low, namely about 4.2. There is already obtained by this measure alone the desired low acidity degree of the complete solution the pH of which should be lower than 5. It is even possible by a maturing process with enzymes to further lower the pH of the sugar proper to a pH of 1.5. It is however easier to obtain the very low pH by adding an organic acid. The pH of the complete solution should lie between .9 and 5 but lies preferably between 1.6 and 2.1. An ideal value is for instance a pH of 1.9 which may thus be obtained by mixing 50% by weight of sugar having a pH of 4.2 with 50% by weight of a solution of acids into water having for example the following composition : 10% lactic acid, 10% citric acid, 10% ascorbic acid and the remainder, thus 20% being comprised of water. The above percentages are % by weight as computed relative to the total weight of the solution. Instead of 20% water, it is for instance also possible to use from 0 to 20% sodium chloride and for example 10% sodium chloride and 10% water.

When use is made besides the liquid sugar also of an organic acid in the solution, use is then made of at least one of the above-mentioned acids while any acid is used with a weight percentage lying between 3 and 15 as computed relative to the total weight of the solution.

The carcasses are sprinkled until the pH on the meat surface reaches 4 and preferably 4.5 under condi-

0013042

tions which enhance the fast forming of a film.

The solution solidifies·indeed very rapidly and forms the desired film as it reaches the meat, when said meat is still relatively warm. Due to the fast lowering of the pH-value the pores of the meat are directly closed which minimizes the drying while the bacteria are usefully killed whereby the keepability is extremely high.

For instance when freshly-slaughtered carcasses are sprinkled at a temperature of still 36° with a solution having a pH of about 1.6 obtained or not by adding organic acids and containing about 20% dextrose, until the pH on the carcass surfaces reaches but 4.5., the keeping time then reaches for

| | |
|---|---|
| beef carcasses | 60 days |
| sheep meat | 75 days |
| horse meat | 40 days |
| pork meat | 15 days. |

While the acidity degree insures mostly the fast closing of the pores, the sugar insures the formation of a film. The drying of the meat is mostly prevented by said film. More than 60% by weight of sugar in the solution would influence the meat flavour. As soon as less than 40% by weight of sugar are used in the solution, the quality of the film formed on the meat is lowered. By means of said film the entry of air into the pores is prevented in such a way that said film thus also operates in the same way as the acidity degree and consequently the combination of film and acidity degree insures a remarkable keepability of the meat.

The invention is in no way limited to the above embodiments and within the scope of the patent application, many changes can be brought to the described embodiments, notably as regards the composition of the solution and the conditions of sprinkling.

Particularly the invention is not limited to the preserving of carcasses or parts thereof. The method can for instance also be applied to meat which is to be vacuum-packed.

0013042

CLAIMS

1. Method for the preserving of pieces of meat, particularly of freshly-slaughtered carcasses and parts thereof, in which a meat piece to be preserved is sprinkled with an acid solution, with the characteristic that the meat piece is sprinkled with an acid solution which contains from 30 to 70% by weight of a liquid sugar.

2. Method according to claim 1, in which the meat piece is sprinkled with a solution having a pH lying between .9 and 5.

3. Method according to claim 2, in which the meat piece is sprinkled with a solution having a pH lying between 1.6 and 2.1.

4. Method according to either one of claims 2 and 3, in which the meat piece is sprinkled with an acid solution of liquid sugar the liquid sugar of which has already per itself a pH which is lower than 5.

5. Method according to claim 4, in which the meat piece is sprinkled with an acid solution of liquid sugar the liquid sugar of which has per itself a pH of about 4.2.

6. Method according to any one of claims 2 to 5, in which the meat piece is sprinkled with a solution which contains besides the liquid sugar, also an edible organic acid.

7. Method according to claim 6, in which the meat piece is sprinkled with a solution of a liquid sugar, which solution comprises besides the sugar 5 to 50% by weight of an organic acid.

8. Method according to claim 7, in which the meat piece is sprinkled with a solution which contains 0 to 15% by weight as computed on the total amount of the solution, of one or more of the acids from the group : lactic acid, citric acid and ascorbic acid.

9. Method according to any one of the preceding claims, in which the meat piece is sprinkled with an acid solution of liquid sugar the sugar of which is compri-

0013042

sed for at least 42% by weight as computed relative to the total amount of sugar, of fructose.

10. Method according to any one of the preceding claims, in which the meat piece is sprinkled with an acid solution of liquid sugar the sugar of which is comprised from 5 to 51% by weight of dextrose syrup.

11. Method according to any one of the preceding claims, in which the meat piece is sprinkled with an acid solution of liquid sugar the sugar of which contains from 4 to 6% by weight maltose.

12. Method according to any one of the preceding claims, in which the meat piece is sprinkled with a solution of liquid sugar which has a pH-value which lies between 3 and .9 until the pH-value on the meat surface has been lowered to about 4.5.

13. Method according to any one of the preceding claims, in which that the solution for the sprinkling is filtered by a filter which makes the solution sterile.

14. Method according to any one of the preceding claims, in which that the solution is sprinkled on the meat directly after the slaughtering as said meat is still warm.

15. Method according to any one of the preceding claims, in which the sprinkling is made under conditions enhancing the forming of a film.

16. Meat piece preserved by a method according to any one of the preceding claims.

17. Solution for the preserving of meat pieces, which contains between 5 and 50% liquid sugar and has a pH which lies between 5 and .9.